# EUROPEAN PATENT APPLICATION

(11) **EP 2 703 129 A2**
(43) Date of publication of application: **05.03.2014**
(21) Application number: 13175620.7
(22) Date of filing: 08.07.2013
(51) Int. Cl.: B25J 9/16

(54) **Robot System**

(30) Priority: 31.08.2012 JP 2012192114
(71) Applicant: Kabushiki Kaisha Yaskawa Denki, Kitakyushu-shi, Fukuoka 806-0004 (JP)
(72) Inventor: Minami, Yusuke, Fukuoka 806-0004 (JP); Kawano, Tomoki, Fukuoka 806-0004 (JP)
(74) Representative: Viering, Jentschura & Partner Patent- und Rechtsanwälte

(57) **Abstract**

A robot includes a first arm (11), a second arm (12), and a controller (2). A first hand (21) is mounted to the first arm (11). The first hand (21) is configured to hold a tool that is configured to perform a predetermined kind of work with respect to a workpiece (4). A second hand (22) is mounted to the second arm (12). The second hand (22) is configured to hold the tool. The controller (2) is configured to control the first arm (11) and the second arm (12) to perform a switching operation of switching the tool from one arm among the first arm (11) and the second arm (12) holding the tool to another arm, so as to control the tool to make a circumferential movement around the workpiece (4).

## Description

### BACKGROUND OF THE INVENTION

### FIELD OF THE INVENTION

The present invention relates to a robot system.

### DISCUSSION OF THE BACKGROUND

Conventionally, such a robot is known that is disposed to face a piece-parts supplier unit and that uses a hand disposed on one arm and a hand disposed on another arm to perform a predetermined kind of work, and such a robot system that uses the robot is also known.

For example, such a robot is disclosed that performs the operation of having the hand disposed on one arm grip a linear object and having the hand disposed on the other arm grip a piece-part and mount it on the linear object (see, for example, Japanese Unexamined Patent Application Publication No. 2010- 158763).

The contents of Japanese Unexamined Patent Application Publication No. 2010-158763 are incorporated herein by reference in their entirety.

In the field of automated operations by robots, there have been demands for expanding the range of operations automated by robots, that is, for automating operations that heretofore have been difficult to automate and thus have relied upon human hand.

The present invention has been made in view of the above-described circumstances, and it is an object of the present invention to provide a robot that ensures efficient automation of work and a robot system that includes the robot.

### SUMMARY OF THE INVENTION

According to one aspect of the present invention, a robot system 100 includes a first arm 11, a second arm 12, a controller 2. A first hand 21 is mounted to the first arm 11. The first hand 21 is configured to hold a tool that is configured to perform a predetermined kind of work with respect to a workpiece 4. A second hand 22 is mounted to the second arm 12. The second hand 22 is configured to hold the tool. The controller 2 is configured to control an operation of each of the first arm 11, the second arm 12, the first hand 21, and the second hand 22. The controller 2 is configured to control the first arm 11 and the second arm 12 to perform a switching operation of switching the tool from one arm among the first arm 11 and the second arm 12 holding the tool to another arm, so as to control the tool to make a circumferential movement around the workpiece 4.

The one aspect of the present invention provides a robot and a robot system that ensure efficient automation of work.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIG. 1 is a block diagram illustrating a robot system according to a first embodiment;
FIG. 2 illustrates a robot included in the robot system;
FIG. 3 illustrates an example of work by the robot as seen from the side;
FIG. 4 illustrates the work as seen from the top;
FIG. 5 illustrates an exemplary procedure of work by the robot;
FIG. 6 illustrates another exemplary procedure of work by the robot;
FIG. 7 illustrates an example of work, as seen from the top, by a robot in a robot system according to a second embodiment;
FIG. 8 illustrates an example of work, as seen from the top, by a robot in a robot system according to a third embodiment; and
FIG. 9 illustrates an example of work, as seen from the top, by a robot in a robot system according to a fourth embodiment.

### DESCRIPTION OF THE EMBODIMENTS

The embodiments will now be described with reference to the accompanying drawings, wherein like reference numerals designate corresponding or identical elements throughout the various drawings.

### (First embodiment)

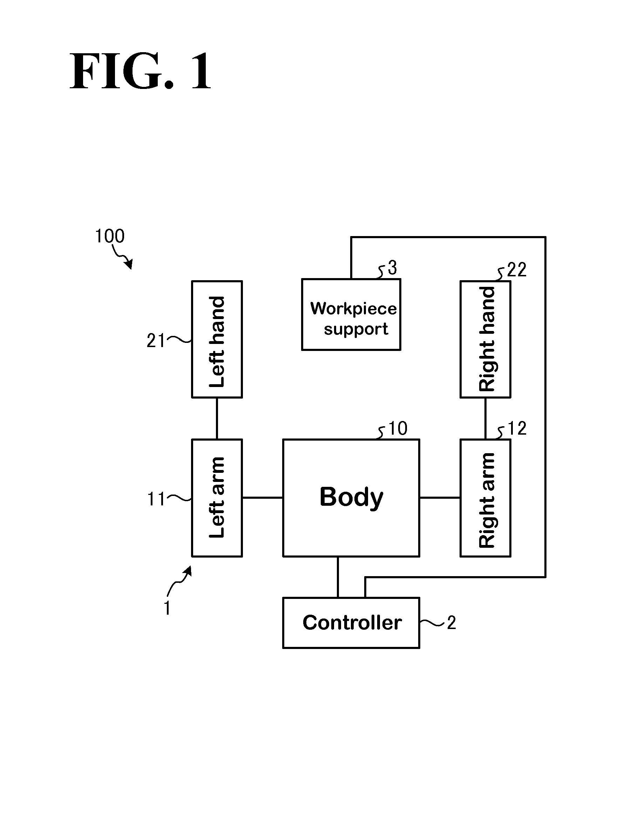

First, The robot system 100 according to the first embodiment will be outlined. FIG. 1 is a block diagram illustrating The robot system 100 according to the first embodiment. As shown, a robot system 100 includes a robot 1 and a controller 2.

As shown, the robot 1 is what is called a two-arm robot that includes: a body 10, which is disposed on an installation surface F such as a plant floor; a left arm (first arm) 11 and a right arm (second arm) 12; and a left hand (first hand) 21 and a right hand (second hand) 22.

The body 10 includes a base 10A, which is supported on the installation surface F, and a rotary body portion 10B, which is rotatable about a rotation axis 108 relative to the base 10A.

The left arm 11 is disposed on the left side (one side) of the rotary body portion 10B and is rotatable about a rotation axis (first axis) 101. The right arm 12 is disposed on the right side (another side) of the rotary body portion 10B and is rotatable about a rotation axis 101. While in this embodiment the left arm 11 and the right arm 12 are rotatable about the same rotation axes 101, which are disposed at shoulder positions of the rotary body portion 10B, the left arm 11 and the right arm 12 may be configured to rotate about mutually different rotation axes.

The controller 2 is capable of controlling at least the operation of each of the left and right arms 11 and 12 and the left and right hands 21 and 22.

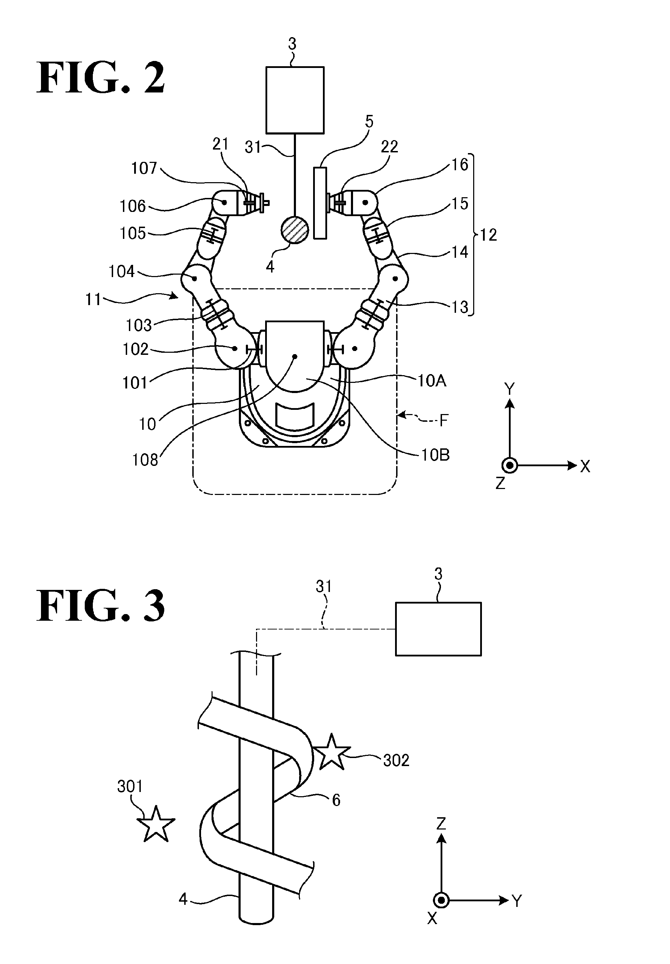

As shown, the robot system 100 according to this embodiment includes a workpiece support 3. The workpiece support 3 is prepared conveniently depending on the kind of a workpiece 4 (see FIG. 2) to be processed. The workpiece support 3 is capable of supporting the workpiece 4 in a form corresponding to the processing, and also capable of conveniently moving the position of the workpiece 4.

Specifically, the workpiece support 3 according to this embodiment includes a support rod 31(see FIG. 2) having a gripping device (not shown) at the distal end, so that the gripping device firmly supports the workpiece 4. Other than the gripping device, the workpiece support 3 includes a driving source such as a motor. The driving source drives the gripping device, making the workpiece 4 movable.

In the robot system 100 according to this embodiment, the controller 2 controls the workpiece support 3 synchronously with at least the operations of the left and right arms 11 and 12 of the robot 1.

The controller 2 includes an electronic circuit, such as a CPU (Central Processing Unit), and a memory storage such as a ROM (Read Only Memory), a RAM (Random Access Memory), and an HDD (Hard Disk Drive), which are not shown. Then, in order for a predetermined kind of work to be performed, the controller 2 controls driving of the left and right arms 11 and 12, driving of the left and right hands 21 and 22, and further, driving of the workpiece support 3, in accordance with a program stored in the memory storage.

While in the robot system 100 according to this embodiment the controller 2 is disposed as a separate entity separated from the robot 1, the controller 2 may be disposed inside the body 10, for example.

FIG. 2 illustrates a plan view of the robot 1 included in the robot system 100. The body 10 of the robot 1 is disposed to face the workpiece 4.

The workpiece 4 in this embodiment has a bar-shaped body having an approximately circular cross-section, and is supported by the workpiece support 3 through the support rod 31, which has the gripping device (not shown) at the distal end.

While the workpiece support 3 according to this embodiment includes the gripping device as the device to directly support the workpiece 4, this should not be construed in a limiting sense. The workpiece support 3 may selectively include a device that supports the workpiece 4 in any other suitable form, such as sandwiching, gripping, and sucking, in accordance with the shape of the workpiece 4.

Also as shown, the left and right arms 11 and 12 are rotatably disposed at both shoulders of the body 10, which is disposed to face the workpiece 4. Specifically, the left arm 11 is rotatably mounted to the left shoulder of the body 10, while the right arm 12 is rotatably mounted to the right shoulder. It is noted that the body 10 may be fixed to the installation surface, or may be rotatably disposed on a base portion, not shown, that is optionally fixed on the installation surface.

The left and right arms 11 and 12 of the robot 1 according to this embodiment have the same configurations, each including a first arm member 13, a second arm member 14, a third arm member 15, and a fourth arm member 16, as shown in FIG. 2. The left and right hands 21 and 22 are respectively mounted to the distal ends of the left and right arms 11 and 12, specifically, to the distal end of each fourth arm member 16.

The first arm member 13 is mounted to the shoulder swingably through the first axis 101 and rotatably through a second axis 102. The second arm member 14 is mounted to the distal end of the first arm member 13 rotatably through a third axis 103. The third arm member 15 is mounted to the distal end of the second arm member 14 rotatably through a fourth axis 104 and pivotably through a fifth axis 105.

The fourth arm member 16 is mounted to the distal end of the third arm member 15 rotatably through a sixth axis 106. At the distal end of the fourth arm member 16, a seventh axis 107 is disposed to connect with and move in tandem with the hand 21(22).

In this embodiment, the rotation axis 108 is perpendicular to the installation surface F, and the first axis 101 is orthogonal to the rotation axis 108. The second axis 102 is orthogonal to the first axis 101; the third axis 103 is orthogonal to the second axis 102; the fourth axis 104 is orthogonal to the third axis 103; the fifth axis 105 is orthogonal to the fourth axis 104; the sixth axis 106 is orthogonal to the fifth axis 105; and the seventh axis 107 is orthogonal to the sixth axis 106. It is noted that "perpendicular" and "orthogonal" are respectively intended to mean substantially perpendicular and substantially orthogonal, with some degree of error tolerated, as appreciated by one of ordinary skill in the art.

Thus, the left hand 21 is mounted to the distal end of the left arm 11 through the seventh axis 107, while the right hand 22 is mounted to the distal end of the right arm 12 through the seventh axis 107. The hands 21 and 22 are independently capable of holding a single tool that performs a predetermined kind of work with respect to the workpiece 4.

Incidentally, the predetermined kind of work performed by the robot system 100 according to this embodiment is the work of spirally winding a strip-shaped object 6 (see FIG. 3), such as a tape, around the circumference surface of the bar-shaped workpiece 4. The strip-shaped object 6 is a feed to the workpiece 4. The tool is a supplier device 5 capable of supplying the strip-shaped object 6, which is to be wound around the workpiece 4.

Specifically, the hands 21 and 22 are each capable of independently holding the reel-shape supplier device 5, around which the strip-shaped object 6 is wound and from which the strip-shaped object 6 is to be spirally wound around the circumference surface of the workpiece 4. For example, the hands 21 and 22 each include, as a holding mechanism not shown, a core coupling device that rotatably holds a core of the reel-shaped supplier device 5 disposed approximately at its center.

Using the robot 1 thus configured and the workpiece support 3, the controller 2 is capable of controlling the supplier device 5 to make a circumferential movement around the workpiece 4. Specifically, the robot system 100 according to this embodiment is capable of having the controller 2 drive the robot 1 and the workpiece support 3 in accordance with a predetermined program to spirally wind the predetermined strip-shaped object 6 around the circumference surface of the workpiece 4. More specifically, the controller 2 is capable of controlling the hands to perform a switching operation of switching the supplier device 5 serving as a tool from one arm holding the supplier device 5 (for example, the left arm 11 serving as a first arm) to the other arm (for example, the right arm 12 serving as a second arm), so as to control the supplier device 5 to make a circumferential movement around the workpiece 4, thereby spirally winding the strip-shaped object 6 around the circumference surface of the workpiece 4.

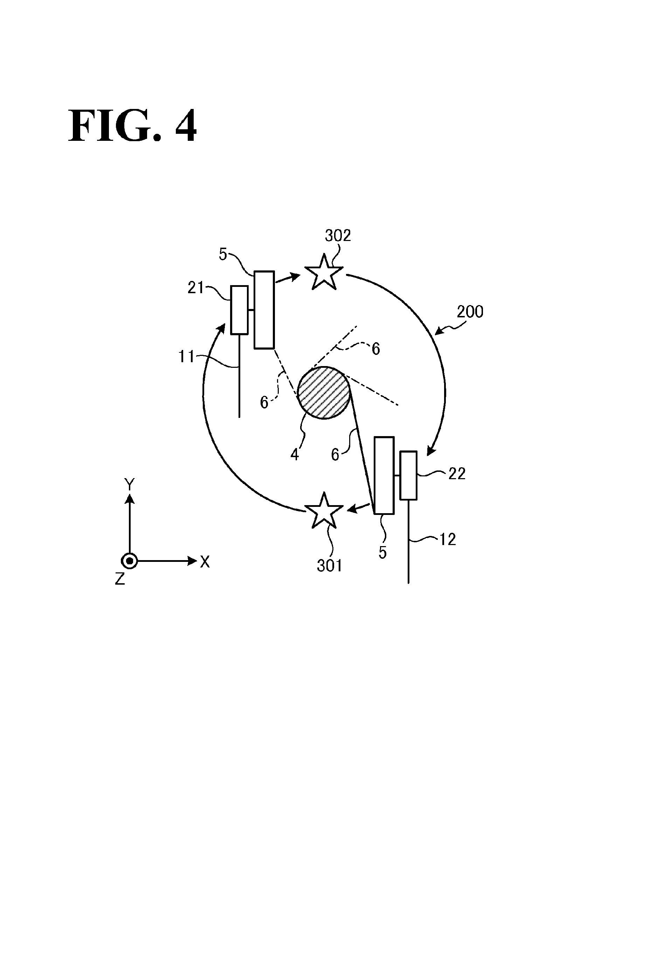

FIG. 3 illustrates an example of work by the robot 1 as seen from the side, and FIG. 4 illustrates the work as seen from the top. As shown, at a first position 301 and a second position 302 in the vicinity of the workpiece 4, the controller 2 controls the hands to perform an operation of switching the supplier device 5 from one hand holding the supplier device 5 (for example, the left hand 21) to the other hand (for example, the right hand 22). It is noted that in FIGs. 3 and 4, the first position 301 and the second position 302 are indicated by star-shaped symbols.

The robot 1 according to this embodiment assumes the first position 301, at which the operation of switching the supplier device 5 is performed, as a forward position relative to the workpiece 4 and assumes the second position 302 as a rearward position relative to the workpiece 4. It is noted that the forward position relative to the workpiece 4 is a position between the workpiece 4 and the body 10 of the robot 1, and the rearward position relative to the workpiece 4 is a position further distanced to the body 10 of the robot 1 than to the workpiece 4.

Here, an example of the operation of switching the supplier device 5 will be described. As shown in FIGs. 3 and 4, at the first position 301, which is the forward position relative to the workpiece 4, the controller 2 controls the hands to switch the supplier device 5 from the right hand 22 holding the supplier device 5 to the left hand 21. Then, at the second position 302, which is the rearward position relative to the workpiece 4, the controller 2 controls the hands to switch the supplier device 5, which is now approximately halfway around the workpiece 4, from the left hand 21 to the right hand 22.

Thus, the robot 1 according to this embodiment performs the operation of switching the supplier device 5 at the first position 301 and the second position 302, and this facilitates the circumferential movement of the supplier device 5 around the workpiece 4. Here, as shown in FIG. 4, the supplier device 5 makes a clockwise circumferential movement around the workpiece 4, drawing a circumferential track 200.

Then, circumferentially moving the supplier device 5 a plurality of times around the workpiece 4 ensures that the strip-shaped object 6 is spirally wound around the circumference surface of the workpiece 4, as shown in FIG. 3.

Spirally winding the strip-shaped object 6 around the circumference surface of the workpiece 4 involves, for example, the case of controlling upward movement of the left and right hands 21 and 22, and the case of additionally drivingly controlling the workpiece support 3.

In the control of upward movement of the left and right hands 21 and 22, the left and right first arm members 13 may be turned into swing movement through the respective shoulders synchronously with the operation of switching the supplier device 5, thereby gradually moving the left and right hands 21 and 22 upward. In the control of the workpiece support 3, the workpiece 4 may be gradually moved upward together with the support rod 31 synchronously with the operation of switching the supplier device 5 by the left and right hands 21 and 22.

Thus, the controller 2 is capable of drivingly controlling the workpiece support 3 synchronously with the operation of each of the left and right arms 11 and 12 and the left and right hands 21 and 22 of the robot 1. Then, the predetermined strip-shaped object 6 can be spirally and efficiently wound around the circumference surface of the bar-shaped workpiece 4.

Also in the robot system 100 according to this embodiment, the workpiece 4 is at a position immediately in front of the body 10 of the robot 1, and the first position 301 and the second position 302, at which the supplier device 5 is switched, are respectively the forward position and the rearward position relative to the workpiece 4. This ensures that the work of spirally winding the predetermined strip-shaped object 6 around the circumference surface of the workpiece 4 can also be implemented by a simple program that turns the bilaterally symmetrical left and right arms 11 and 12 into an approximately similar operation and that turns the bilaterally symmetrical left and right hands 21 and 22 into an approximately similar operation.

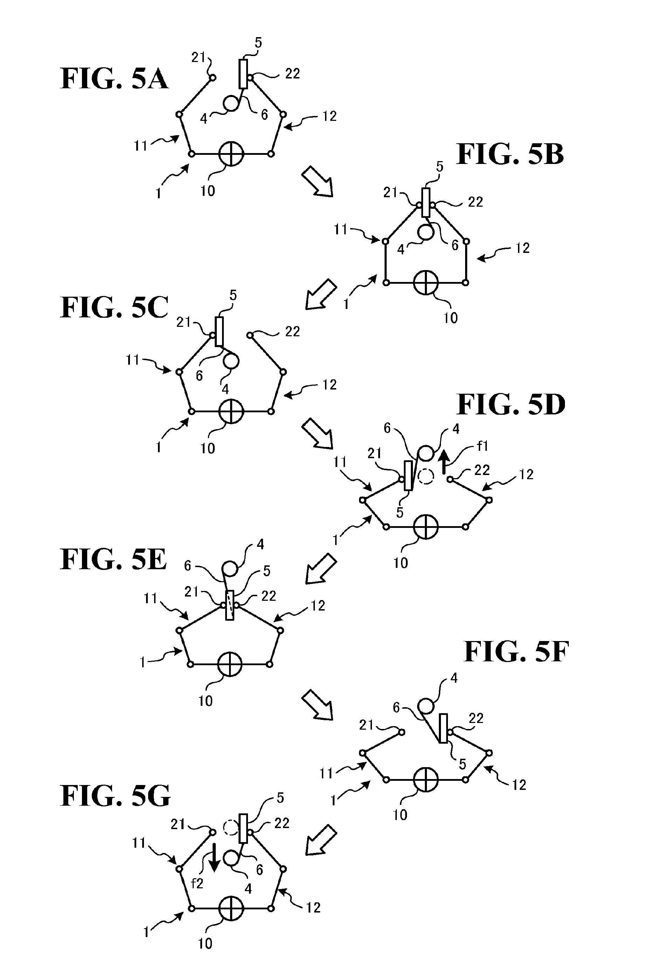

Here, by referring to FIG. 5, description will be made with regard to the robot 1's actual work of winding the strip-shaped object 6 around the workpiece 4 while performing the operation of switching the supplier device 5. FIG. 5 illustrates an exemplary procedure of work by the robot 1. It is assumed that the distal end of the strip-shaped object 6 drawn from the supplier device 5 is already coupled to the workpiece 4.

In this example, as opposed to the clockwise circumferential movement of the supplier device 5 around the workpiece 4 as in the example of FIG. 4, the supplier device 5 makes an anti-clockwise circumferential movement around the workpiece 4.

As shown in FIG. 5A, in this example, the supplier device 5 is held by the right hand 22. The state shown in FIG. 5A is a result of the controller 2's driving control of the left and right arms 11 and 12 so that the right hand 22 holding the supplier device 5 and the left hand 21 not holding the supplier device 5 are both at rear positions relative to the workpiece 4. Also, the controller 2 moves the left and right arms 11 and 12 upward while keeping them into a circumferential movement, with the strip-shaped object 6 making a circumferential movement while drawing a spiral.

Then, as shown in FIG. 5B, at a position immediately after the workpiece 4, the controller 2 controls the left and right hands 21 and 22 to confront one another, permitting the supplier device 5 to be switched at this timing. The supplier device 5 is situated between the left hand 21 and the right hand 22, and it is these left and right hands 21 and 22 that switch the supplier device 5.

Also in the robot 1 according to this embodiment, in the switching operation, the controller 2 controls the circumferential speed of the other hand (in this example, the left hand 21) to follow the circumferential speed of one hand holding the supplier device 5 (in this example, the right hand 22).

Specifically, in winding the strip-shaped object 6 around the bar-shaped workpiece 4, it is necessary to keep the tension of the strip-shaped object 6 constant; otherwise, the strip-shaped object 6 could be displaced and the winding form could result in disorder. In view of this, in order to prevent the tension from degrading and prevent the winding of the strip-shaped object 6 from becoming loose, the supplier device 5 is switched, in other words, transferred in such a state that the circumferential speed of the left hand 21 not holding the supplier device 5 follows the circumferential speed of the right hand 22 holding the supplier device 5.

That is, in the state shown in FIG. 1B, the supplier device 5 is held by the left hand 21 and by the right hand 22 at the same time for a moment. Thus, the strip-shaped object 6 does not have its tension varied even during the switching, and is wound around the circumference surface of the workpiece 4 with a constant tension.

As shown in FIG. 5C, the supplier device 5 transferred to the left hand 21 moves to the rear-left side of the workpiece 4. Here, the left and right arms 11 and 12 and the left and right hands 21 and 22 are in a state substantially similar to the state shown in FIG. 5A, with the only difference being displacement in the height direction.

Next, the controller 2 bends the left and right arms 11 and 12, thereby pulling the supplier device 5 held by the left hand 21 to the front-left side of the workpiece 4, as shown in FIG. 5D. Also in this case, the controller 2 moves the left and right arms 11 and 12 upward while keeping them into a circumferential movement, with the strip-shaped object 6 making a circumferential movement while drawing a spiral.

At the same time, the controller 2 controls the workpiece support 3 to move the position of the workpiece 4 in a direction in which the workpiece 4 is distanced from the body 10 of the robot 1 (see the arrow f1). That is, the controller 2 controls the workpiece support 3 synchronously with the operations of the left and right arms 11 and 12 of the robot 1.

Then, as shown in FIG. 5E, also at a forward position relative to the workpiece 4, the controller 2 controls the left and right hands 21 and 22 to confront one another so as to switch the supplier device 5. Then, also in this case, the supplier device 5 is switched in such a state that the circumferential speed of the right hand 22 not holding the supplier device 5 follows the circumferential speed of the left hand 21 holding the supplier device 5 so that the tension of the strip-shaped object 6 remains unchanged.

As shown in FIG. 5F, the supplier device 5 transferred to the right hand 22 moves to the right-front side of the workpiece 4. Here, the left and right arms 11 and 12 and the left and right hands 21 and 22 are in a state substantially similar to the state shown in FIG. 5D, with the only difference being displacement in the height direction.

Next, the controller 2 changes the bending degree of the left and right arms 11 and 12 to the side on which they straighten, thereby moving the supplier device 5 held by the right hand 22 to the right-rear side of the workpiece 4, as shown in FIG. 5G. At the same time, the controller 2 controls the workpiece support 3 to move the position of the workpiece 4 in a direction in which the workpiece 4 approaches the body 10 of the robot 1 (see the arrow f2).

Here, the left and right arms 11 and 12 and the left and right hands 21 and 22 of the robot 1 each have the same posture as the state shown in FIG. 5A, with the only difference being displacement in the height direction. Thus, one cycle of the robot 1's work of winding the strip-shaped object 6 around the workpiece 4 ends. Then, repeating the winding work results in the strip-shaped object 6 wound around the circumference surface of the workpiece 4.

As has been described hereinbefore, in the first embodiment, the robot system 100 including the robot 1 ensures efficient work of spirally winding the strip-shaped object 6 around the bar-shaped workpiece 4.

It is noted that in the above-described embodiment, the controller 2 also controls driving of the workpiece support 3. A similar operation is also possible, however, by keeping the workpiece support 3 stationary and controlling driving of the left and right arms 11 and 12 and the left and right hands 21 and 22 of the robot 1 alone.

Here, description will be made with regard to the case where the workpiece 4, which is the winding target of the strip-shaped object 6, is in a different form. While in the above-described example the workpiece 4 has a bar-shaped body, the operation of winding the strip-shaped object 6 can also be performed when, for example, two bar-shaped bodies are arranged in parallel to one another, or when the workpiece 4 has a U shape. In this case, the supplier device 5 makes a circumferential movement around two workpieces 41 and 42 as if to draw a figure of "8".

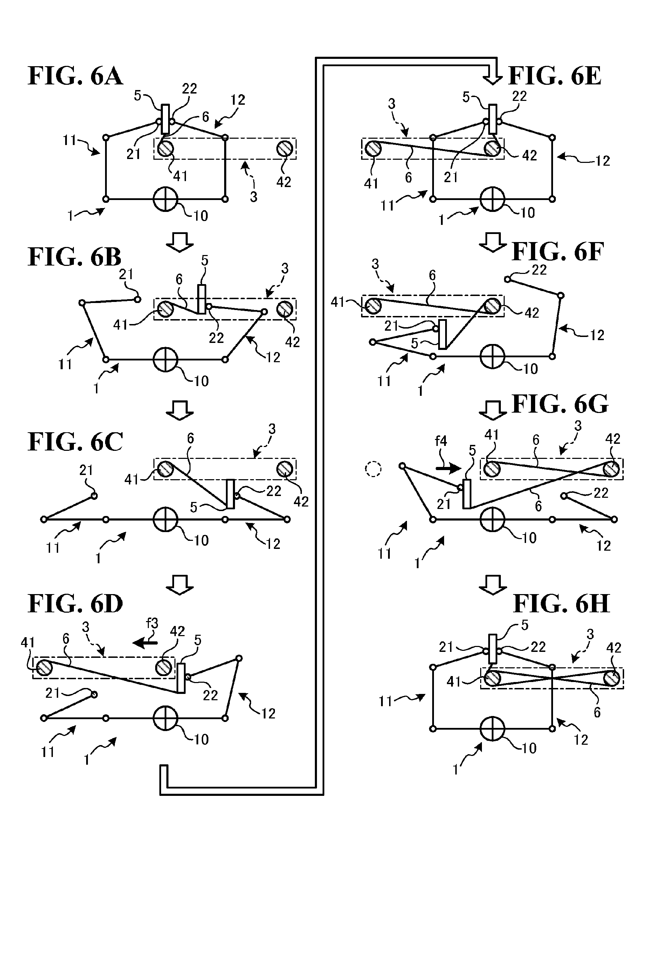

FIG. 6 illustrates another exemplary procedure of work by the robot 1. As shown, in this example, the two workpieces 41 and 42 arranged in parallel to one another are held by the common workpiece support 3. It is assumed that the distal end of the strip-shaped object 6 drawn from the supplier device 5 is already coupled to the workpiece 41, which is positioned on the left.

FIG. 6A illustrates a timing at which the supplier device 5 is switched from the left hand 21 to the right hand 22. As shown in FIG. 6A, at a position immediately after the workpiece 41, the controller 2 controls the left and right hands 21 and 22 to confront one another as if the hands were clasped in prayer, permitting the supplier device 5 to be switched at this timing. The form of the switching operation is similar to the above-described example; in the switching operation, the circumferential speed of the right hand 22 follows the circumferential speed of the left hand 21 holding the supplier device 5.

Next, as shown in FIG. 6B, the left and right arms 11 and 12 are bent in respective outer directions. Specifically, the right hand 22, to which the supplier device 5 has been transferred, moves to the right side of the workpiece 41, so that the right hand 22 is positioned between the workpiece 41 and the workpiece 42.

Next, the controller 2 bends the left and right arms 11 and 12 further deeply to make them closer to the body 10, thereby pulling the supplier device 5 held by the right hand 22 to the front side of the workpiece support 3, as shown in FIG. 6C.

Then, as shown in FIG. 6D, the controller 2 moves the workpiece support 3 in the left direction until the supplier device 5 is at the right-front side of the workpiece 42 (see the arrow f3). Here, the controller 2 turns the arm members 13 to 16 of the right arm 12 into rotation in accordance with the moving operation of the workpiece support 3, thereby positioning the supplier device 5 held by the right hand 22 at the right side of the workpiece 42, as shown.

Next, as shown in FIG. 6E, at a position immediately after the workpiece 42, the controller 2 controls the left and right hands 21 and 22 to confront one another as if the hands were clasped in prayer, permitting the supplier device 5 to be switched at this timing. Here, the controller 2 moves the left arm 11 as if to pass over the strip-shaped object 6 extending between the workpieces 41 and 42 so as to avoid interference.

Also in this case, in the switching operation, the circumferential speed of the left hand 21 follows the circumferential speed of the right hand 22 holding the supplier device 5. Thus, the strip-shaped object 6 having one end coupled to the workpiece 41 is also wound around part of the circumference surface of the workpiece 42.

Next, the controller 2 bends the left arm 11 to the vicinity of the body 10 while moving the left hand 21 upward, thereby pulling the supplier device 5 switched to and held by the left hand 21 to the front side of the workpiece support 3, as shown in FIG. 6F.

Next, as shown in FIG. 6G, the controller 2 moves the workpiece support 3 in the right direction until the supplier device 5 is at the front-left side of the workpiece 41 (see the arrow f4). Here, the controller 2 turns the arm members 13 to 16 of the left arm 11 into rotation in accordance with the moving operation of the workpiece support 3, thereby positioning the supplier device 5 held by the left hand 21 at the left side of the workpiece 41, as shown. Here, the right arm 12 is also bent to the vicinity of the body 10.

Then, as shown in FIG. 6H, at a position immediately after the workpiece 41, the controller 2 controls the left and right hands 21 and 22 to confront one another as if the hands were clasped in prayer, permitting the supplier device 5 to be switched at this timing. Also in this case, in the switching operation, the circumferential speed of the right hand 22 follows the circumferential speed of the left hand 21 holding the supplier device 5. Thus, the strip-shaped object 6 is wound around the left and right workpieces 41 and 42 in a figure of "8". Then, repeating the winding work results in the strip-shaped object 6 wound across the workpieces 41 and 42.

Incidentally, in the above-described embodiment, the spiral winding of the strip-shaped object 6 around the workpiece 4 has been illustrated as an example of the work performed with respect to the workpiece 4. The work may also be to wind the strip-shaped object 6 once into a ring shape.

The material that is wound around the supplier device 5 and to be supplied to the workpiece 4 may be other than the above-described strip-shaped object 6, such as a tape, and may be a linear object such as a thread, a wire, and a cable.

### (Second embodiment)

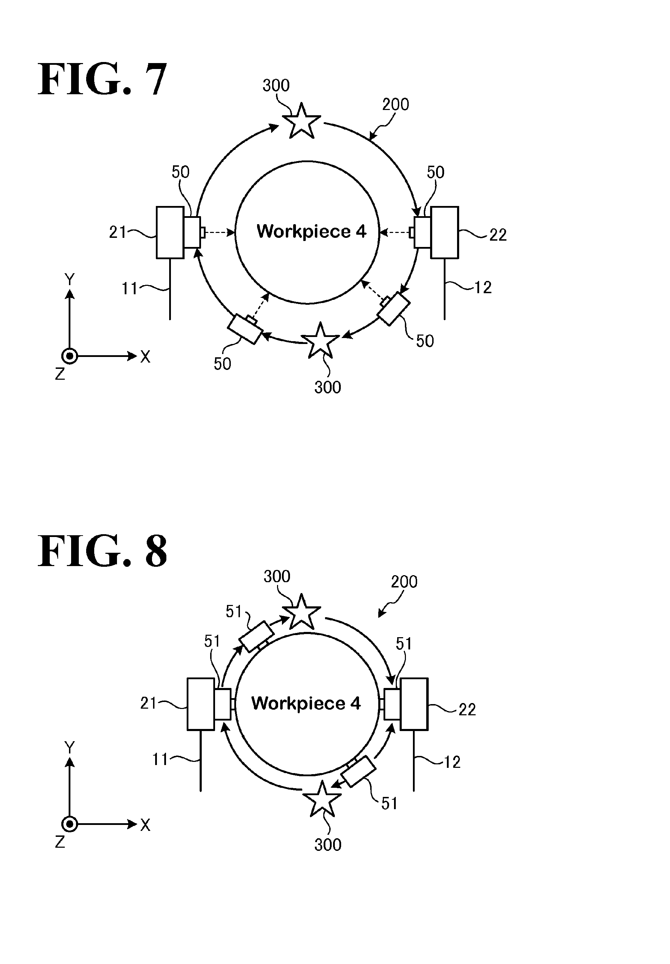

FIG. 7 illustrates an example of work, as seen from the top, by the robot 1 in the robot system 100 according to a second embodiment. In this embodiment, the above-described tool is an inspection device that inspects the circumference surface of the workpiece. Specifically, the inspection device is a camera 50, and the work that the robot system 100 performs is the work of picking up an image of the circumference surface of the workpiece 4 by the camera 50 making a circumferential movement around the solid or hollow cylindrical workpiece 4 while being switched between the left and right hands 21 and 22.

As shown in FIG. 7, the controller 2 of the robot 1 controls the camera 50 to be switched at switching positions 300, which are first and second positions and indicated by star-shaped symbols, in the vicinity of the workpiece 4. Specifically, at the switching positions 300, the controller 2 controls the hands to perform a switching operation of switching the camera 50 from one hand holding the camera 50 (for example, the left hand 21) to the other hand (for example, the right hand 22), so as to control the camera 50 to make a circumferential movement around the workpiece 4. Here, the operations of the left and right arms 11 and 12 and the left and right hands 21 and 22 accord with the operation control described in the first embodiment.

It is noted that the inspection device will not be limited to the camera 50, and that it is also possible to use, for example, any of various sensors such as an ultrasonic sensor and an infrared sensor. The use of any of these sensors also ensures an efficient inspection of the circumference surface of the workpiece 4, similarly to the use of the camera 50.

Thus, in the robot system 100 according to the second embodiment, the robot 1 is used to efficiently inspect the circumference surface of the solid or hollow cylindrical workpiece 4.

### (Third embodiment)

FIG. 8 illustrates an example of work, as seen from the top, by the robot 1 in the robot system 100 according to a third embodiment. In this embodiment, a heater 51, which is a heating device to heat the circumference surface of the solid or hollow cylindrical workpiece 4, replaces the supplier device 5, which is described as the tool in the first embodiment, and the camera 50, which is an inspection device described as the tool in the second embodiment.

Specifically, the work that the robot system 100 according to this embodiment performs is the work of heating the circumference surface of the workpiece 4 by the heater 51 making a circumferential movement around the workpiece 4 while being switched between the left and right hands 21 and 22.

As shown in FIG. 8, the controller 2 of the robot 1 controls the heater 51 to be switched at the switching positions 300, which are first and second positions and indicated by star-shaped symbols, in the vicinity of the workpiece 4. Specifically, at the switching positions 300, the controller 2 controls the hands to perform a switching operation of switching the heater 51 from one hand holding the heater 51 (for example, the left hand 21) to the other hand (for example, the right hand 22), so as to control the heater 51 to make a circumferential movement around the workpiece 4. Here, the operations of the left and right arms 11 and 12 and the left and right hands 21 and 22 accord with the operation control described in the first and second embodiments. While in this example the heater 51 makes a circumferential movement while making contact with the circumference surface of the workpiece 4, the heater 51 may also be separated from the circumference surface in the heating.

Thus, in the robot system 100 according to the third embodiment, the robot 1 is used to efficiently heat the circumference surface of the solid or hollow cylindrical workpiece 4.

While the robot 1 and the robot system 100 have been described in the above-described embodiments, the configurations described in the embodiments should not be construed in a limiting sense. For example, while the first position 301 and the second position 302, at which the switching operation of the tool is performed, have been illustrated respectively as the forward position and the rearward position relative to the workpiece 4, the first position 301 and the second position 302 may be any other positions around the workpiece 4. In this case, the controller 2 appropriately controls driving of the left and right arms 11 and 12 and the left and right hands 21 and 22, or driving of the workpiece support 3.

For the shape of the workpiece 4, it may not necessarily be circular in cross-section, and a variant shape such as a polygon is also possible.

When the tool is the supplier device 5, the controller 2 in the switching operation of the supplier device 5 controls the circumferential speed of the other hand (for example, the right hand 22) to follow the circumferential speed of one hand holding the supplier device 5 (for example, the left hand 21) so as to keep the tension of the strip-shaped object 6 constant. The controller 2, however, may also dare to vary the tension of the strip-shaped object 6 before and/or after the operation of switching the supplier device 5, which realizes various other winding forms.

The controller 2 may also make a change in the circumferential path of the tool relative to the workpiece 4, for example, before and/or after the switching operation of the tool.

For example, when the tool is the supplier device 5 and the strip-shaped object 6 (or linear object) is to be spirally wound around the workpiece 4, the circumferential path may be shifted to shift the spiral pitch. Thus, the spiral pitch may be changed before and/or after switching of the supplier device 5, which realizes various winding forms of the strip-shaped object 6 (or linear object).

### (Fourth embodiment)

Incidentally, in the robot 1 of each of the above-described first to third embodiments, the tool (for example, the supplier device 5) to perform a predetermined kind of work with respect to the workpiece 4 is held by the hands (the left hand 21 and the right hand 22).

The hands, however, may also directly hold a linear object such as, for example, a string, a thread, a rope, and a wire.

Specifically, in the robot system 100 including the robot 1 of the above-described configuration, the controller 2 controls the hands to perform a switching operation of switching a linear object 70 from one hand among the first hand (the left hand 21 or the right hand 22) and the second hand (the right hand 22 or the left hand 21) holding the linear object 70 to the other hand while passing the linear object 70 through a ring-shaped portion formed in the linear object 70 so as to form a knot in the linear object 70.

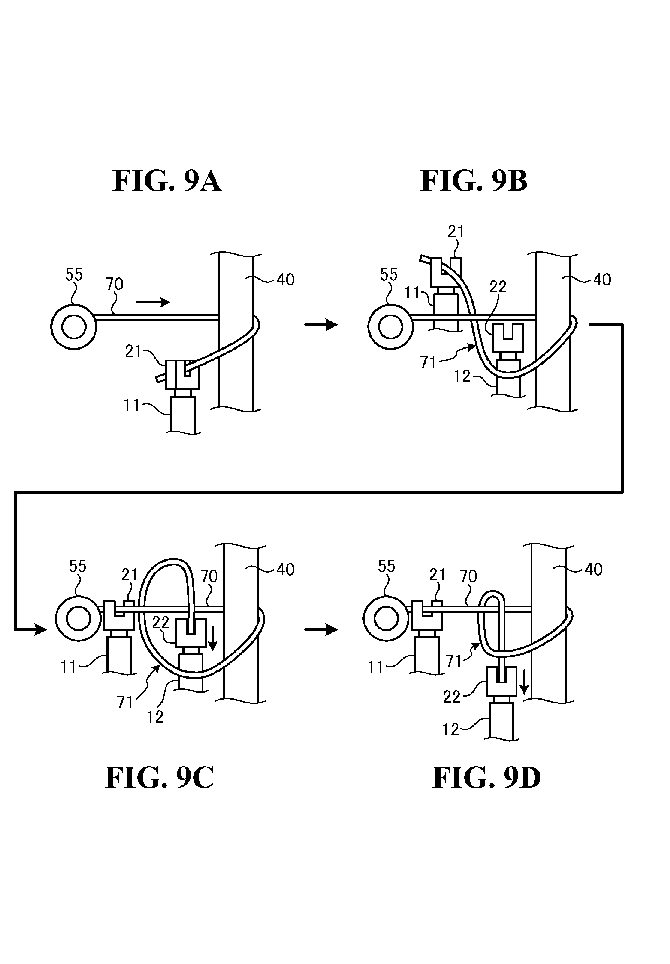

FIG. 9 illustrates an example of work by the robot 1 in the robot system 100 according to a fourth embodiment. This embodiment includes: the left arm 11 (first arm) to which to mount the left hand 21 (first hand) capable of directly holding the linear object 70, instead of holding the supplier device 5 described in the first embodiment or other devices; and the right arm 12 (second arm) to which to mount the right hand 22 (second hand) capable of directly holding the linear object 70.

The work that the robot system 100 according to this embodiment performs is the work of forming a knot through switching the linear object 70.

Here, FIG. 9A shows an initial state in which the linear object 70 drawn from a drum 55 intersects a bar-shaped jig 40 and is bent back on the bar-shaped jig 40. The distal end of the linear object 70 is held by the left hand 21. It is noted that this initial state can be implemented by, for example, the operation of: gripping the distal end of the linear object 70 by the left hand 21; drawing the linear object 70 from the drum 55 and folding the linear object 70 on the way as if to form a hairpin turn; and then passing the jig 40 through the folded portion from above or below. Alternatively, the jig 40 may be set in advance, and in this state, the operation may be to: grip the distal end of the linear object 70 and draw it from the drum 55 by the left hand 21; switch the linear object 70 to the right hand 22 at a position past the jig 40 (at the right side of the jig 40 as shown in FIG. 9); move the right hand 22 in the left direction in front of the jig 40; and switch the linear object 70 back to the left hand 21 at a position past the jig 40 (at the left side of the jig 40 as shown in FIG. 9).

Next, as shown in FIG. 9B, with the right hand 22 supporting the linear object 70 between the left hand 21 holding the distal end of the linear object 70 and the jig 40, the left hand 21 together with the left arm 11 is moved over the linear object 70 between the drum 55 and the jig 40 to behind them. Here, the linear object 70 is drawn from the drum 55 to a length necessary for this operation, and as shown, an approximately triangular ring-shaped portion 71 is formed between the drum 55 and the jig 40.

Next, the distal end of the linear object 70 is switched from the left hand 21 to the right hand 22, and as shown in FIG. 9C, with the left hand 21 holding the linear object 70 on the drum 55 side, the right hand 22 pulls the linear object 70 downward in the ring-shaped portion 71.

Thus, as shown in FIG. 9D, the ring-shaped portion 71 is tied, resulting in a knot formed by the linear object 70.

In the above-described embodiments, the controller 2 drivingly controls the workpiece support 3 synchronously with the operations of the left and right arms 11 and 12 of the robot 1. The controller 2, however, may also drivingly control the workpiece support 3 synchronously with the operations of the left and right hands 21 and 22 instead of the left and right arms 11 and 12.

Further, in the above-described embodiments, it is also acceptable to mount the left and right arms 11 and 12 to the installation surface F without providing the body 10.

Obviously, numerous modifications and variations of the present invention are possible in light of the above teachings. It is therefore to be understood that within the scope of the appended claims, the invention may be practiced otherwise than as specifically described herein.
- 1: Robot
- 2: Controller
- 3: Workpiece support
- 4: Workpiece
- 5: Supplier device (tool)
- 6: Strip-shaped object
- 10: Body
- 11: Left arm
- 12: Right arm
- 21: Left hand
- 22: Right hand
- 55: Drum
- 70: Linear object
- 100: Robot system
- 300: Switching position
- 301: First position
- 302: Second position

## Claims

1. A robot system (100), **characterized by**:
a first arm (11) to which a first hand (21) is mounted, the first hand (21) being configured to hold a tool that is configured to perform a predetermined kind of work with respect to a workpiece (4);
a second arm (12) to which a second hand (22) is mounted, the second hand (22) being configured to hold the tool; and
a controller (2) configured to control an operation of each of the first arm (11), the second arm (12), the first hand (21), and the second hand (22), the controller (2) being configured to control the first arm (11) and the second arm (12) to perform a switching operation of switching the tool from one arm among the first arm (11) and the second arm (12) holding the tool to another arm, so as to control the tool to make a circumferential movement around the workpiece (4).

2. The robot system (100) according to claim 1, further comprising a body (10) to which the first arm (11) and the second arm (12) are mounted.

3. The robot system (100) according to claim 2,
wherein the body (10) comprises
a base (10A) supported on an installation surface (F), and
a rotary body portion (10B) rotatably disposed relative to the base (10A), wherein the first arm (11) is disposed on one side of the rotary body portion (10B), and wherein the second arm (12) is disposed on another side of the rotary body portion (10B).

4. The robot system (100) according to any one of claims 1 to 3, wherein in the switching operation, the controller (2) is configured to control a circumferential speed of the other hand (21) or (22) to follow a circumferential speed of the one hand (21) or (22).

5. The robot system (100) according to any one of claims 1 to 4, wherein the tool comprises a supplier device (5) configured to supply a feed that is to be wound around the workpiece (4).

6. The robot system (100) according to any one of claims 1 to 3, wherein the tool comprises an inspection device (50) configured to inspect a circumference surface of the workpiece (4).

7. The robot system (100) according to any one of claims 1 to 3, wherein the tool comprises a heating device (51) configured to heat a circumference surface of the workpiece (4).

8. The robot system (100) according to any one of claims 1 to 7, further comprising a workpiece support (3) configured to support the workpiece (4).

9. The robot system (100) according to claim 8,
wherein the workpiece support (3) is drivingly controlled by the controller (2), and wherein the controller (2) is configured to drivingly control the workpiece support (3) synchronously with the operation of each of the arms (11, 12) of the robot.

10. The robot system (100) according to any of the claims 1 to 9, wherein the tool is a linear object,
the first hand (21) being configured to hold the linear object;
the second hand (22) being configured to hold the linear object; and
the controller (2) being configured to control the first hand (21) and the second hand (22) to perform a switching operation of switching the linear object from one hand (21) or (22) among the first hand (21) and the second hand (22) holding the linear object to another hand (21) or (22) while passing the linear object through a ring-shaped portion formed in the linear object so as to form a knot in the linear object.
